# EUROPEAN PATENT APPLICATION

(11) **EP 2 840 360 A1**
(43) Date of publication of application: **25.02.2015**
(21) Application number: 14180961.6
(22) Date of filing: 14.08.2014
(51) Int. Cl.: G01C 22/00, G01P 1/02, G01P 3/487

(54) **Rotation detecting device and wheel assembly**

(30) Priority: 20.08.2013 TW 102129791
(71) Applicant: Kwang Yang Motor Co., Ltd., Kaohsiung City 807 (TW)
(72) Inventor: Ting, Hsin-Chih, 807 Kaohsiung (TW); Lan, Shau-Pin, 813 Kaohsiung (TW); Kang, Yu-Jing, 802 Kaohsiung (TW)
(74) Representative: Wright, Howard Hugh Burnby

(57) **Abstract**

A rotation detecting device (4) is for detecting rotation of a wheel (312) relative to a wheel axle (311) . The rotation detecting device (4) includes: a rotary unit (6) including a magnetic component (62), and a holder (61) for mounting the magnetic component (62) on the wheel (312) ; and a sensing unit (5) for mounting on the wheel axle (311) and for detecting rotation of the magnetic component (62) . The holder (61) has a threaded portion (615) for coupling threadedly with the wheel (312). A wheel assembly including the rotation detecting device (4) is also disclosed.

## Description

This invention relates to a detecting device, and more particularly to a rotation detecting device for a vehicle and a wheel assembly including the rotation detecting device.

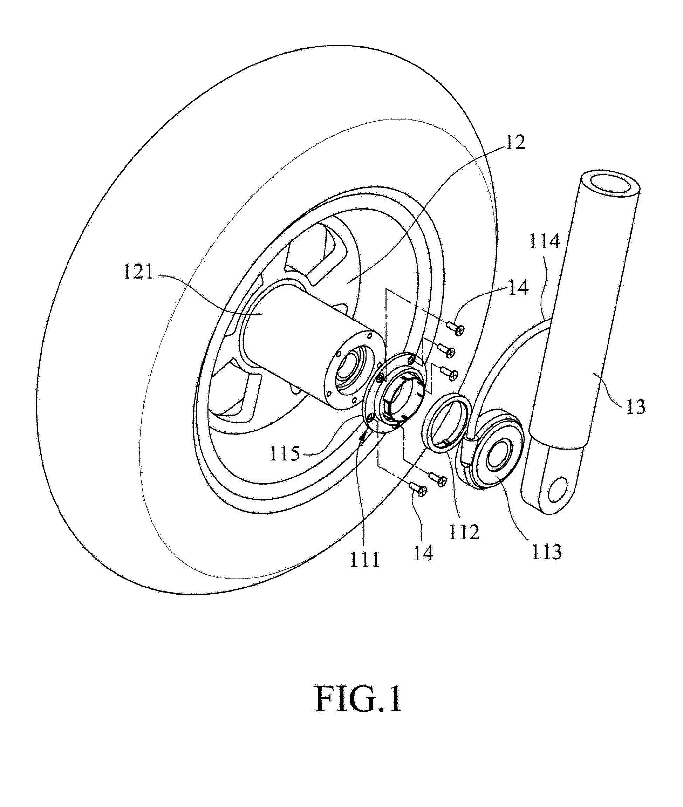

Referring to Fig. 1, U.S. Pat. No. 6, 958, 601 shows a conventional motorcycle mileage inductor. The motorcycle mileage inductor includes a magnetic device holder 111 that is fixedly fastened to a collar 121 of a wheel set 12 of a front wheel of a motorcycle using a plurality of screws 14, an annular magnetic device 112 that is sleeved on the magnetic device holder 111, and a cover shell 113 that covers the annular magnetic device 112 and that is fastened on a front fork 13. When the magnetic device holder 111 rotates with the collar 121 of the wheel set 12 of the front wheel, the annular magnetic device 112 rotates with the magnetic device holder 111 relative to the cover shell 113. A sensor (not shown) is disposed on the cover shell 113 for detecting magnetic poles of the magnetic device holder 111, and produces an induced current that is outputted through a signal line 114. Through the induced current, an amount of rotation of the front wheel may be calculated so as to obtain a mileage.

Because the magnetic device holder 111 is fastened to the collar 121 of the wheel set 12 of the front wheel using screws 14, the screws 14 increase complexity of assembling the motorcycle mileage inductor.

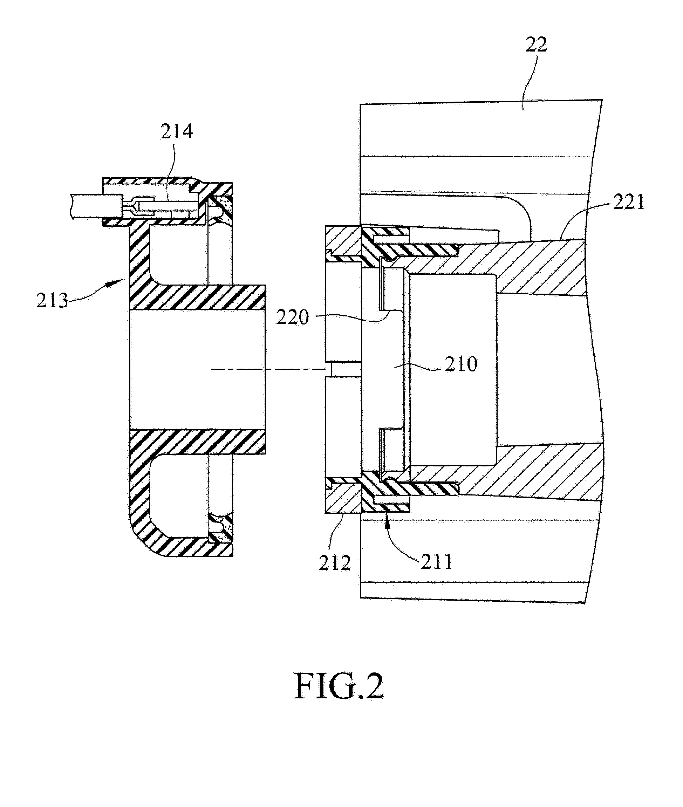

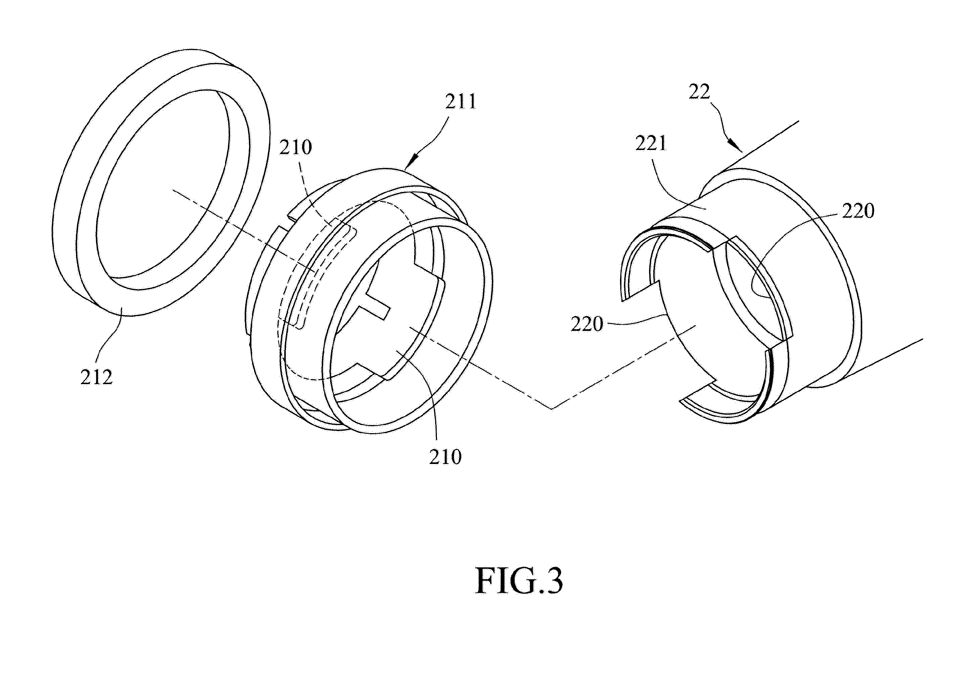

Referring to Figs. 2 and 3, another conventional motorcycle mileage inductor is shown to include a magnetic device holder 211 that couples with a collar 221 of a wheel set 22 of a front wheel, an annular magnetic device 212 that is sleeved on the magnetic device holder 211, a cover shell 213 that covers and is mounted on the annular magnetic device 212, and a sensor 214 that is disposed in the cover shell 213. The collar 221 of the wheel set 22 includes a plurality of grooves 220 that are angularly spaced apart from one another. The magnetic device holder 211 includes a plurality of protrusions 210 that are corresponding in shape with respect to and that are respectively coupled with the grooves 220 of the collar 221 of the wheel set 22.

Although screws are not necessary for connection between the collar 221 and the magnetic device holder 211, gaps are formed between the collar 221 of the wheel set 22 and the magnetic device holder 211 due to the use of the grooves 220 and the protrusions 210 for coupling, thereby resulting in vibration of the magnetic device holder 211 when the magnetic device holder 211 rotates with the collar 221 of the wheel set 22. Therefore, the sensor 214 may not accurately detect magnetic poles of the magnetic device holder 211, so that an amount of rotation of the front wheel may not be accurately calculated.

Therefore, the object of the present invention is to provide a rotation detecting device and a wheel assembly that can overcome at least one of the aforesaid drawbacks of the prior art.

According to one aspect of the present invention, there is provided a rotation detecting device for detecting rotation of a wheel relative to a wheel axle. The rotation detecting device includes a rotary unit and a sensing unit. The rotary unit includes a magnetic component, and a holder for mounting the magnetic component on the wheel such that the magnetic component is rotatable with the wheel relative to the wheel axle. The holder has a threaded portion for coupling threadedly with the wheel.The sensing unit is for mounting on the wheel axle and for detecting rotation of the magnetic component.

According to another aspect of the present invention, there is provided a wheel assembly that includes a wheel axle, a wheel mounted rotatably on the wheel axle, and the aforesaid rotation detecting device. The holder of the rotary unit of the rotation detecting device is mounted on the wheel. The sensing unit of the rotation detecting device is mounted on the wheel axle.

Other features and advantages of the present invention will become apparent in the following detailed description of the embodiments of the present invention, with reference to the accompanying drawings, in which:
Fig. 1 is an exploded perspective view of a conventional motorcycle mileage inductor illustrated in U.S. Patent No. 6,958,601;
Fig. 2 is a fragmentary sectional view of another conventional motorcycle mileage inductor;
Fig. 3 is an exploded perspective view of the motorcycle mileage inductor shown in Fig. 2;
Fig. 4 is an exploded perspective view of the embodiment of a rotation detecting device according to the present invention;
Fig. 5 is a sectional view illustrating the embodiment of a rotation detecting device mounted on a wheel;
Fig. 6 is an exploded perspective view of a variation of the embodiment;
Fig. 7 is an exploded perspective view of another variation of the embodiment;
Fig. 8 is a sectional view illustrating the embodiment of a rotation detecting device of Fig. 7 mounted on a wheel; and
Fig. 9 is a sectional view illustrating the embodiment mounted on another position of the wheel.

Before the present invention is described in greater detail, it should be noted that like elements are denoted by the same reference numerals throughout the disclosure.

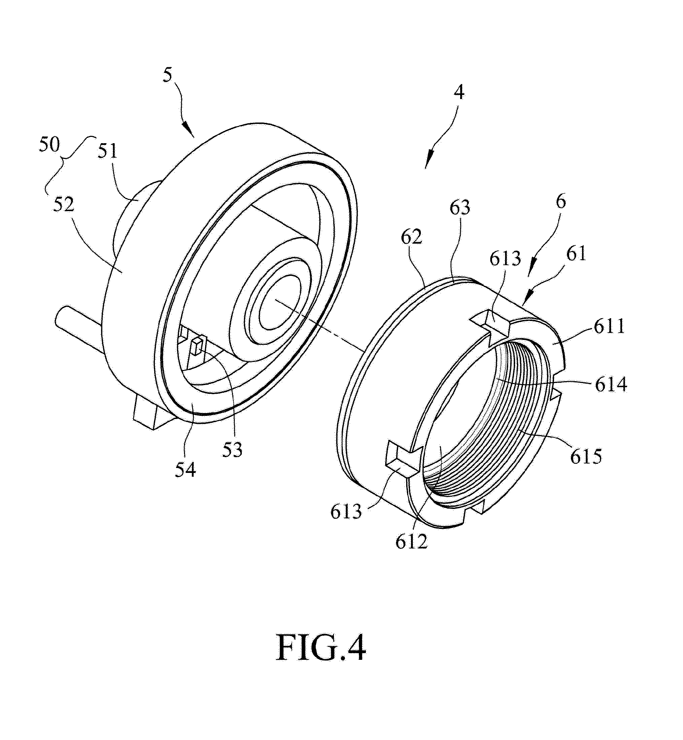

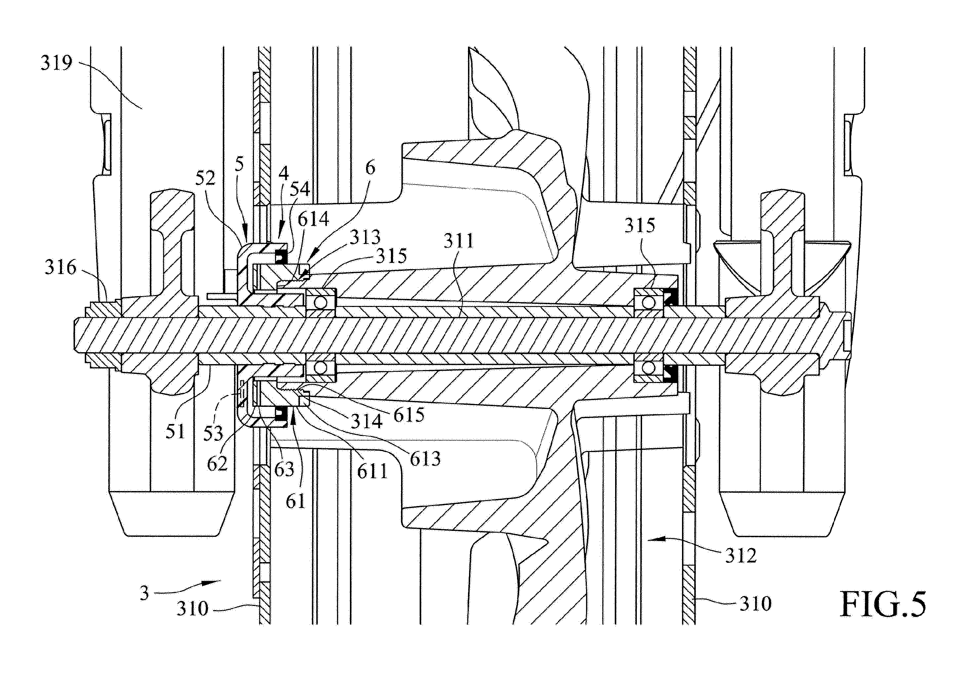

Referring to Figs. 4 and 5, the embodiment of a rotation detecting device according to the present invention is adapted to detect rotation of a wheel 312 relative to a wheel axle 311 of a vehicle 3.

The vehicle 3 is a motorcycle in this embodiment and includes a vehicle frame (not shown) with a front fork 319, a rear wheel unit (not shown), a front wheel unit that has the wheel axle 311 configured to be mounted on the front fork 319 of the vehicle frame, the wheel 312 that is mounted rotatably on the wheel axle 311, twobearings 315 that are respectively disposed on two opposite sides of the wheel 312 and between the wheel 312 and the wheel axle 311, two brake disks 310 that are respectively disposed on two opposite sides of the wheel 312, and a nut 316 that is threadedly disposed on the wheel axle 311.

The wheel 312 has a sleeve part 313 through which the wheel axle 311 extends and which is rotatable relative to the wheel axle 311. In this embodiment, the sleeve part 313 has an external thread 314 formed at an outer surface of the sleeve part 313.

The rotation detecting device 4 includes a rotary unit 6 formounting on the wheel 312, a sensing unit 5 for mounting on the wheel axle 311, a partition 54 and a magnetically-conductive component 63.

The rotary unit 6 includes a magnetic component 62 and a holder 61 for mounting the magnetic component 62 on the wheel 312 such that the magnetic component 62 is rotatable with the wheel 312 relative to the wheel axle 311.

The holder 61 has a surrounding wall portion 611 and an annular connecting wall portion 612 connected to one end of the surrounding wall portion 611. The annular connecting wall portion 612 has an inner diameter smaller than that of the surrounding wall portion 611. The annular connecting wall portion 612 has an abutting portion 614 that projects inwardly with respect to an inner surface of the surrounding wall portion 611. In this embodiment, the surrounding wall portion 611 has an internal thread formed at an inner surface of the surrounding wall portion 611 to serve as a threaded portion 615 of the holder 61 for coupling threadedly with the wheel 312. To be specific, the internal thread formed at the inner surface of the surrounding wall portion 611 couples threadedly with the external thread 314 formed at the outer surface of the sleeve part 313 of the wheel 312 such that the sleeve part 313 of the wheel 312 abuts against the abutting portion 614.

In this embodiment, the magnetic component 62 is generally similar to an annular magnetic device disclosed in U.S. Pat. No. 6,958,601.

The magnetically-conductive component 63 is disposed between the holder 61 and the magnetic component 62 via an adhesive or a welding method. The magnetically-conductive component 63 may assist in the detection of magnetic poles of the magnetic component 62. The magnetically-conductive component 63 is not essential as long as magnetic fields of magnetic poles of the magnetic component 62 are large enough to be detected by the sensing unit 5. In this embodiment, the magnetically-conductive component 63 is a magnetically-conductive metal sheet, for example but not limited to, an iron sheet.

The sensing unit 5 includes a sensor component 53 for detecting rotation of the magnetic component 62, and a cover 50 for mounting the sensor component 53 on the wheel axle 311. The cover 50 surrounds the surrounding wall portion 611, and includes a sleeve part 51 configured for extension of the wheel axle 311 therethrough and for tightly fastening on the wheel axle 311, and a shell part 52 connected to the sleeve part 51 and surrounding the sleeve part 51 and the surrounding wall portion 611.

The partition 54 is disposed on an internal surface of the cover 50 and surrounds an outer surface of the surrounding wall portion 611. The partition 54 prevents moisture and mud from accumulating in a space between the sensing unit 5 and the rotary unit 6 so as to reduce a chance of failure when the sensing unit 5 detects the magnetic poles of the magnetic component 62. In this embodiment, the partition 54 is an O-shaped ring and is made of a rubber material.

Referring to Fig. 5, the threaded portion 615 of the surrounding wall portion 611 couples threadedly with the external thread 314 formed at the outer surface of the sleeve part 313 of the wheel 312, so that the rotary unit 6 and the sleeve part 313 of the wheel 312 rotate synchronously.

When the vehicle 3 is running, the magnetic component 62 of the rotary unit 6 rotates with the wheel 312. The sensor component 53 detects the magnetic poles of the magnetic component 62, and produces an induced current that is outputted through a signal line (not shown). Through the induced current, an amount of rotation of the magnetic component 62 may be calculated so as to obtain speed of the vehicle 3.

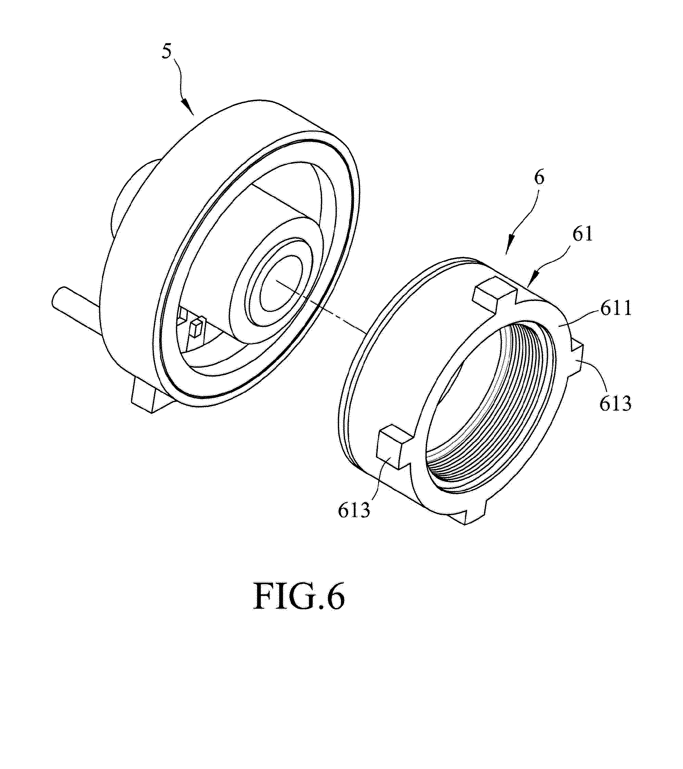

In this embodiment, the holder 61 further has one or more tool engaging portions 613 disposed on the surrounding wall portion 611 and configured to engage a tool (not shown). Each of the tool engaging portions 613 may be a groove (see Fig. 4) in the surrounding wall portion 611 or a protrusion (see Fig. 6) on the surrounding wall portion 611.

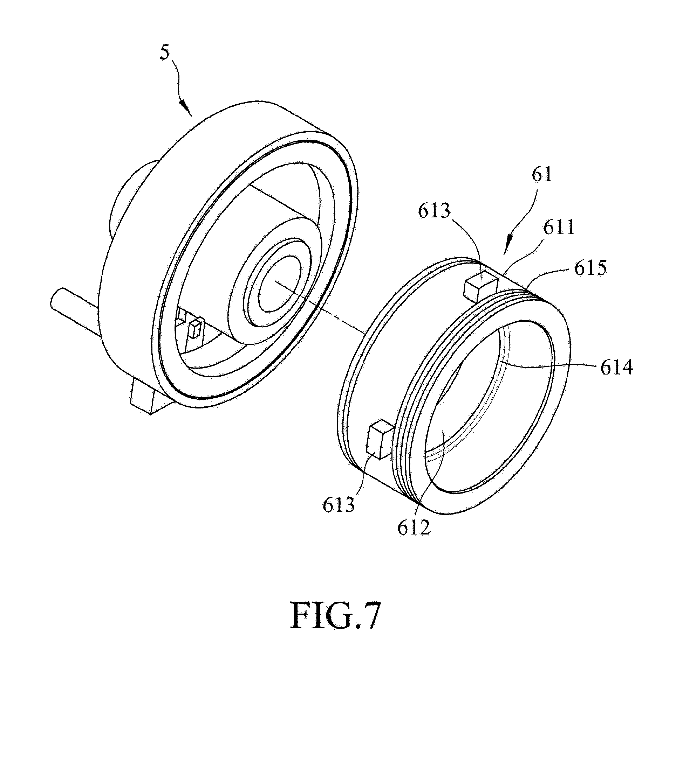

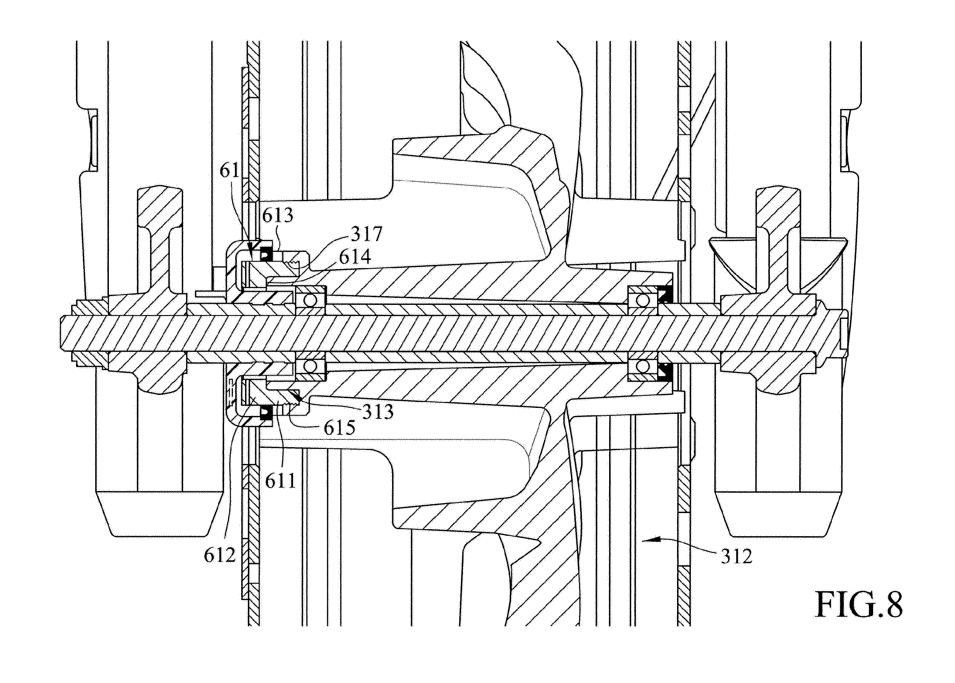

Figs. 7 and 8 show a variation of this embodiment. In this variation, the surrounding wall portion 611 has an external thread formed at the outer surface of the surrounding wall portion 611 to serve as the threaded portion 615 of the holder 61. The sleeve part 313 of the wheel 312 has an internal thread 317 formed at an inner surface of the sleeve part 313 of the wheel 312. The external thread formed at the outer surface of the surrounding wall portion 611 couples threadedly with the internal thread 317 formed at the inner surface of the sleeve part 313.

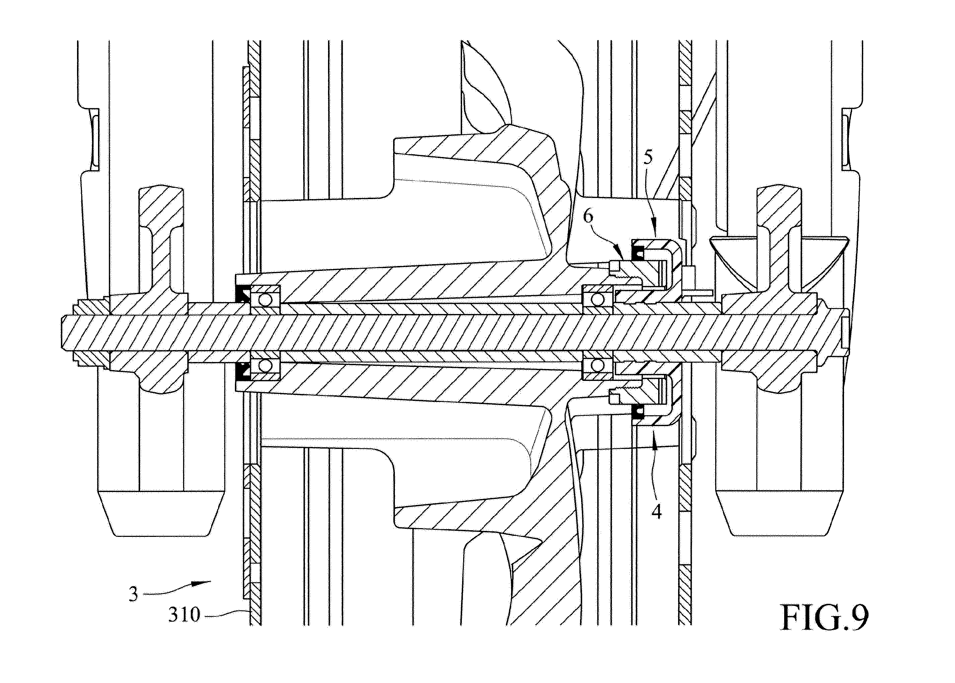

Referring to Figs. 5 and 9, the rotation detecting device 4 may be mounted on any one of the opposite sides of the wheel 312.

The embodiment of a wheel assembly according to the present invention includes a wheel axle 311, a wheel 312 mounted rotatably on the axle 311, and the aforesaid rotation detecting device 4. The holder 61 of the rotary unit 6 of the rotation detecting device 4 is mounted on the wheel 312. The sensing unit 5 of the rotation detecting device 4 is mounted on the wheel axle 311.

To sum up, since the rotary unit 6 is fastened on the wheel 312 without using screws or additional fasteners, installation of the holder 61 becomes relatively easier. Through the holder 61 of the rotary unit 6 coupling threadedly with the wheel 312, the holder 61 and the wheel 312 rotate synchronously, so that changes in magnetic poles of the magnetic component 62 can be accurately detected by the sensor component 53.

## Claims

1. A rotation detecting device (4) for detecting rotation of a wheel (312) relative to a wheel axle (311), the rotation detecting device (4) including
a rotary unit (6) including a magnetic component (62), and a holder (61) for mounting the magnetic component (62) on the wheel (312) such that the magnetic component (62) is rotatable with the wheel (312) relative to the wheel axle (311), and
a sensing unit (5) for mounting on the wheel axle (311) and for detecting rotation of the magnetic component (62),
**characterized in that**:
the holder (61) has a threaded portion (615) for coupling threadedly with the wheel (312).

2. The rotation detecting device (4) of claim 1, further **characterized in that** the holder (61) has a surrounding wall portion (611) and an annular connecting wall portion (612) connected to one end of the surrounding wall portion (611), the annular connecting wall portion (612) having an inner diameter smaller than that of the surrounding wall portion (611), the annular connecting wall portion (612) having an abutting portion (614) that projects inwardly with respect to an inner surface of the surrounding wall portion (611), the surrounding wall portion (611) having one of an internal thread formed at an inner surface of the surrounding wall portion (611) and an external thread formed at an outer surface of the surrounding wall portion (611) to serve as the threaded portion (615) of the holder (61).

3. The rotation detecting device (4) of claim 2, **characterized in that** the holder (61) further has a tool engaging portion (613) disposed on the surrounding wall portion (611) and configured to engage a tool.

4. The rotation detecting device (4) of claim 3, further **characterized in that** the tool engaging portion (613) is a groove in the surrounding wall portion (611) or a protrusion on the surrounding wall portion (611).

5. The rotation detecting device (4) of claim 2, **characterized in that** the holder (61) further has a plurality of tool engaging portions (613) disposed on the surrounding wall portion (611) and configured to engage a tool.

6. The rotation detecting device (4) of claim 5, further **characterized in that** each of the tool engaging portions (613) is a groove in the surrounding wall portion (611) or a protrusion on the surrounding wall portion (611).

7. The rotation detecting device (4) of any one of claims 2 to 6, further **characterized in that** the sensing unit (5) includes a sensor component (53) for detecting rotation of the magnetic component (62), and a cover (50) for mounting the sensor component (53) on the wheel axle (311), the cover (50) surrounding the surrounding wall portion (611), the rotation detecting device (4) being **characterized by** a partition (54) disposed between an internal surface of the cover (50) and the outer surface of the surrounding wall portion (611).

8. The rotation detecting device (4) of claim 7, further **characterized in that** the cover (50) includes a sleeve part (51) configured for extension of the wheel axle (311) therethrough and for fastening on the wheel axle (311), and a shell part (52) connected to and surrounding the sleeve part (51).

9. The rotation detecting device (4) of any one of claims 1 to 6, further **characterized in that** the sensing unit (5) includes a sensor component (53) for detecting rotation of the magnetic component (62), and a cover (50) for mounting the sensor component (53) on the wheel axle (311), the cover (50) surrounding the surrounding wall portion (611), the rotation detecting device (4) being **characterized by** a partition (54) disposed between an internal surface of the cover (50) and the outer surface of the surrounding wall portion (611).

10. The rotation detecting device (4) of any one of claims 1 to 9, further **characterized by** a magnetically-conductive component (63) disposed between the holder (61) and the magnetic component (62) .

11. A wheel assembly including a wheel axle (311), a wheel (312) mounted rotatably on the wheel axle (311), and a rotation detecting device (4) according to any one of claims 1 to 10, the holder (61) of the rotary unit (6) of the rotation detecting device (4) being mounted on the wheel (312), the sensing unit (5) of the rotation detecting device (4) being mounted on the wheel axle (311).

12. The wheel assembly of claim 11, when the rotation detecting device (4) is according to any one of claims 2 to 8, further **characterized in that** the wheel (312) has a sleeve part (313) through which the wheel axle (311) extends, the sleeve part (313) of the wheel (312) abutting against the abutting portion (614), the threaded portion (615) of the holder (61) threadedly engaging the sleeve part (313) of the wheel (312).

13. The wheel assembly of claim 11 or 12, further **characterized in that** the wheel axle (311) is configured to be mounted on a front fork (319) of a vehicle frame.
